**Europäisches Patentamt**

**European Patent Office**

**Office européen des brevets**

(19)

(11) Veröffentlichungsnummer: **0 244 862 B1**

## (12) EUROPÄISCHE PATENTSCHRIFT

(45) Veröffentlichungstag der Patentschrift: **11.12.91**

(51) Int. Cl.⁵: **A01D 41/12, A01F 12/00**

(21) Anmeldenummer: **87106636.1**

(22) Anmeldetag: **07.05.87**

(54) **Mähdrescher.**

(30) Priorität: **09.05.86 US 861467**

(43) Veröffentlichungstag der Anmeldung:
**11.11.87 Patentblatt 87/46**

(45) Bekanntmachung des Hinweises auf die
Patenterteilung:
**11.12.91 Patentblatt 91/50**

(84) Benannte Vertragsstaaten:
**BE DE ES FR GB IT**

(56) Entgegenhaltungen:
**EP-A- 0 173 223       EP-A- 0 173 224
DE-A- 2 742 067       DE-A- 3 045 084
FR-A- 2 304 274       GB-A- 1 352 470
GB-A- 2 163 635**

(73) Patentinhaber: **DEERE & COMPANY
1 John Deere Road
Moline, Illinois 61265(US)**

(72) Erfinder: **West, Neil L.
6914 Valley Dr.
Bettendorf Iowa 52722(US)**
Erfinder: **Turner, Reed James
3601 - 186th St. N.
E. Moline Illinois 61244(US)**

(74) Vertreter: **Feldmann, Bernhard et al
DEERE & COMPANY European Office, Patent
Department Steubenstrasse 36-42 Postfach
503
W-6800 Mannheim 1(DE)**

## Beschreibung

Die Erfindung bezieht sich auf einen Mähdrescher mit einer nach dem Axialflußprinzip arbeitenden Trennvorrichtung, die zwei nebeneinander angeordnete, von je einem Trenngehäuse umgebene, gegenläufig umlaufbare Rotoren aufweist, mit denen Erntegut in Form einer Matte spiralförmig durch die Trenngehäuse bewegbar ist, die sich stromaufwärts bis in ein gemeinsames aus durchgehenden, die Rotoren teilweise zylinderförmig umgebenden Seitenwänden bestehendes Einzugsgehäuse mit einer Einlaßöffnung erstrecken, wobei die Rotoren an der der Einlaßöffnung abgelegenen Seite von der einen Hälfte des stromaufwärts eine quer verlaufende Stirnplatte aufweisenden Einzugsgehäuses umgeben sind und die andere Hälfte des Einzugsgehäuses durch je einen halbzylindrischen, die Rotoren zumindest teilweise umgebenden Teil gebildet wird, wobei in beiden Hälften des Einzugsgehäuses Führungsrippen derart vorgesehen sind, daß das durch die Einlaßöffnung aufgegebene Erntegut nach etwa einer halben Umdrehung der Rotoren in den halbzylindrischen, die Rotoren zumindest teilweise umgebenden Teil des Einzugsgehäuses bringbar ist.

Es ist bereits ein Mähdrescher bekannt, der nach dem Axialflußprinzip arbeitende Trennvorrichtungen aufweist (EP-A-0 173 224), in denen zwei parallel zueinander verlaufende Rotoren angeordnet sind, über die das Erntegut mittels intermittierend einwirkender Finger durch die Trennvorrichtung bewegt wird. Im vorderen Bereich der Trennvorrichtung befindet sich eine nach oben hin offene Einlaßöffnung, die über eine Dreschvorrichtung und eine Schlagtrommel mit Erntegut beschickt wird.

Bei dem bekannten Mähdrescher (EP-A1-0 173 223), von dem die Erfindung ausgeht, sind zwei Einlaßöffnungen vorgesehen, die zwar auch dreieckförmig ausgebildet sind, jedoch mit ihrer Spitze auf der Längsmittelachse je eines Rotors liegen, wobei der Bereich zwischen den Rotoren abgedeckt ist.

Demgegenüber liegt der Erfindung die Aufgabe zugrunde, die in den beiden Trenngehäusen vorgesehene Einlaßöffnung zur Aufnahme des aus der Dreschvorrichtung abgegebenen Erntegutes derart auszubilden und anzuordnen, daß mit einem geringen Reibungsverlust das Erntegut in den Spalt in den beiden gegenläufig angetriebenen Rotoren geleitet wird. Diese Aufgabe ist dadurch gelöst worden, daß die zuvor genannten halbzylindrischen, die Rotoren zumindest teilweise umgebenden Teile des Einzugsgehäuses jeweils nur eine freie Kante aufweisen, die mit der Stirnplatte die Einlaßöffnung bilden und mit Bezug auf die Förderrichtung der Trennvorrichtung von ihren stromaufwärts liegenden seitlichen Enden zu einem stromabwärts liegenden Punkt im wesentlichen dreieckförmig zusammenlaufen.

Auf diese Weise ist eine einzige etwa dreieckförmig verlaufende Einlaßöffnung vorgesehen, die somit an ihrem vorderen Ende relativ breit ausgebildet ist und sich weit nach hinten erstreckt, so daß das eintretende Gut von einer beträchtlichen Länge des Einzuges zwischen den gegenläufigen Rotoren leicht erfaßt werden kann. Die Einlaßöffnung arbeitet dabei mit den Führungsrippen derart zusammen, daß das von den Rotoren erfaßte Gut nicht wieder in die Einlaßöffnung zurückgeführt wird, sondern nach etwa einer halben Umdrehung bereits so weit stromabwärts geführt ist, daß es sich in dem geschlossenen Bereich des Einzugs- bzw. Trenngehäuses befindet. Die schräg verlaufenden Kanten der Einzugsöffnung führen den ankommenden Erntegutstrom zusammen und begünstigen das einfache Erfassen des Gutes durch die gegensinnig umlaufenden Rotoren.

Das Einspeisen des Gutes zwischen die Rotoren wird nach einem weiteren Vorschlag der Erfindung verbessert, wenn im Einzugsgehäuse zwischen den Rotoren eine Trennwand vorgesehen ist.

Im einzelnen kann nach der Erfindung der stromabwärts liegende Schnittpunkt der durch schräges Anschneiden gebildeten Kanten der anderen halbzylindrischen Hälfte des Einzugsgehäuses in der Vertikalebene der Trennwand liegen.

Das Erfassen des Gutes durch die Rotoren wird weiter erleichtert, wenn ferner der Einzugsteil der Rotoren zwei stromabwärts und nach unten geneigt verlaufende Platten aufweist, die die schräg verlaufenden Kanten schneiden, wobei jede Platte verstellbar ist und sich in das zylindrische Einzugsgehäuse erstreckt.

Weiter das Einspeisen des Erntegutstromes verbessernde Maßnahmen sind Gegenstand der verbleibenden Unteransprüche.

Im folgenden wird die Erfindung anhand von mehrere Ausführungswege darstellenden Zeichnungen näher erläutert. Es zeigen:

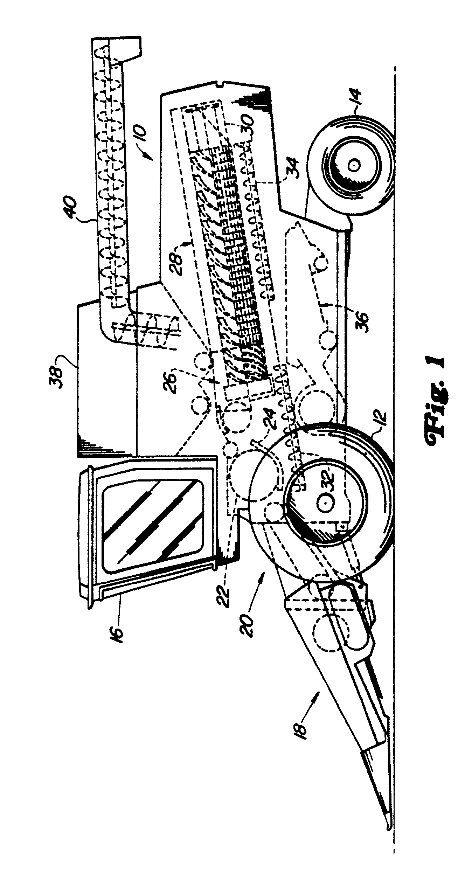

Fig. 1    eine schematische Darstellung eines Mähdreschers, der nach dem Axialflußprinzip arbeitet,

Fig. 2    eine Teilansicht der Dreschvorrichtung mit sich in Axialrichtung erstreckender Trennvorrichtung,

Fig. 3    den Einzugsbereich der Trennvorrichtung in der Ansicht von vorne,

Fig. 4    den Einzugsbereich der Trennvorrichtung in der Ansicht von oben,

Fig. 5    eine Antriebsvorrichtung der beiden nebeneinander angeordneten Trenntrommeln der Trennvorrichtung,

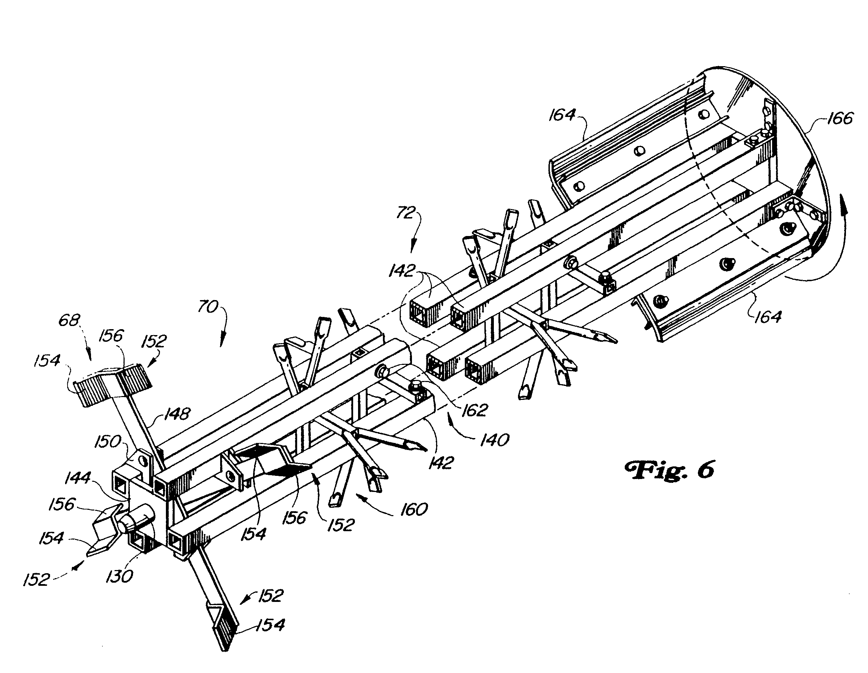

Fig. 6    eine perspektivische Darstellung einer Trenntrommel,

Fig. 7    eine Ansicht entlang der Linie 7-7 gemäß Fig. 2,

Fig. 8    einen Teilquerschnitt entlang der Linie 8-8 gemäß Fig. 7,

Fig. 9    ein weiteres Ausführungsbeispiel der Trenntrommel, ähnlich wie in Fig. 7,

Fig. 10    ein weiteres Ausführungsbeispiel der Trenntrommel, ähnlich wie in Fig. 8,

Fig. 11    ein weiteres Ausführungsbeispiel des oberen Teils der Einzugszone, ähnlich wie in Fig. 4,

Fig. 12    eine Ansicht entlang der Linie 12-12 gemäß Fig. 4,

Fig. 13    einen Querschnitt entlang der Linie 13-13 gemäß Fig. 2.

In der Zeichnung ist mit 10 ein Mähdrescher bezeichnet, der nach dem Axialflußprinzip arbeitet und der zwei vordere antreibbare Laufräder 12 und zwei hintere steuerbare Laufräder 14 aufweist, die von einer Bedienungsperson in einer Fahrerkabine 16 am vorderen Ende des Mähdreschers 10 gesteuert werden.

Das Erntegut wird mittels einer Erntebergungsvorrichtung 18 aufgenommen, die am vorderen Ende des Mähdreschers angeordnet ist und zu der ein vertikal schwenkbares Schrägfördergehäuse 20 gehört, über das Erntegut einer Dreschtrommel 22 und einem Dreschkorb 24 zugeführt wird.

Stromabwärts der Dreschtrommel 22 ist ein Einzugsteil 26 vorgesehen, der zur Gutmittelversorgung einer Trennvorrichtung 28 gehört, die am Ende mit einem Austragteil 30 versehen ist. Das aus der Trennvorrichtung 28 ausgeschiedene bzw. abgetrennte Erntegut wird über zwei Rückfördervorrichtungen 32 und 34 einer Reinigungsvorrichtung 36 zugeführt. Aus der Reinigungsvorrichtung 36 gelangt das Erntegut über entsprechende in der Zeichnung nicht weiter dargestellte Fördervorrichtungen zu einem Sammelbehälter 38. Das in dem Sammelbehälter aufgenommene Erntegut kann mit einer Austragfördervorrichtung 40 entladen werden. Der Einzugsteil 26 und die Trennvorrichtung 28 bestehen aus zwei nebeneinander angeordneten, symmetrisch ausgebildeten Elementen. In der nachfolgenden Beschreibung ist lediglich das eine linke Element im Detail beschrieben.

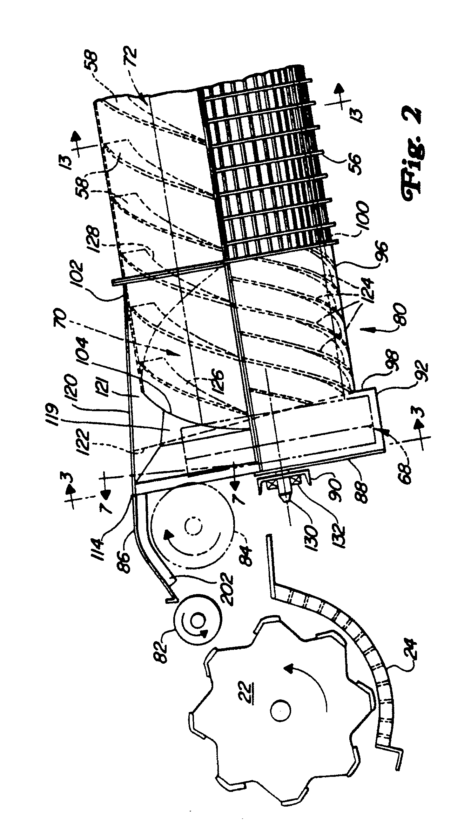

Wie aus den Figuren 2, 3 und 4 hervorgeht, besteht die Trennvorrichtung 28 aus einer rechten und linken Trenneinheit 50 und 52. Bei der linken Trenneinheit 50 besteht der untere Teil eines Trenngehäuses 54 aus einem Trennkorb 56, und im oberen Teil des Trenngehäuses sind zahlreiche nebeneinander angeordnete, schneckenförmig angeordnete Führungsrippen 58 vorgesehen. Im rechten und linken Trenngehäuse 54 lagern Rotoren 60 und 62, die sich um parallel zueinander verlaufende Achsen 64 und 66 drehen. Die beiden einander identischen Rotoren 60 und 62 bestehen aus drei Hauptteilen, die sich in der Anordnung und der Funktion voneinander unterscheiden. Und zwar besteht der Rotor 60 aus einem vorderen Teil 68, einem Beschickungsteil 70 und einem Trennteil 72.

Der Hauptbestandteil des Einzugsteils 26 besteht aus einem Einzugsgehäuse 80, dessen stromabwärts liegendes Ende durch den Anfang des Trennkorbes 56 der Trenneinheit 50 bestimmt wird. Vor dem Einzugsgehäuse 80 befindet sich eine Umlenkrolle 82 sowie eine Schlagtrommel 84, die mit einer Führungsplatte 86 zusammenwirkt. Die untere Hälfte des stromaufwärts liegenden Endes des Einzugsgehäuses 80 wird durch eine Stirnplatte 88 begrenzt, deren obere Kante durch einen quer verlaufenden, u-förmigen Träger 90 begrenzt wird. Der stromaufwärts liegende untere Teil 92 des Einzugsgehäuses 80 umgibt dicht den vorderen Teil 68 und geht dann allmählich in einen nach oben gewölbten Bogenteil bzw. einen Wulst 94 über. Der Hauptteil 96 der unteren Hälfte des Einzugsgehäuses 80 ist halbkreisförmig ausgebildet mit einer höher gelegenen Mittelachse. Somit ergibt sich zwischen dem Teil 92 und dem sich daran anschließenden Hauptteil 96 eine geschlossene Stufe 98 bzw. ein Absatz. Ferner besteht auch eine relativ kleine Stufe an der Stelle 100 zwischen dem Einzugsgehäuse 80 und dem Trenngehäuse 54, da der Hauptteil 96 mit Bezug auf die innenliegende Oberfläche des Trennkorbes 56 versetzt ist.

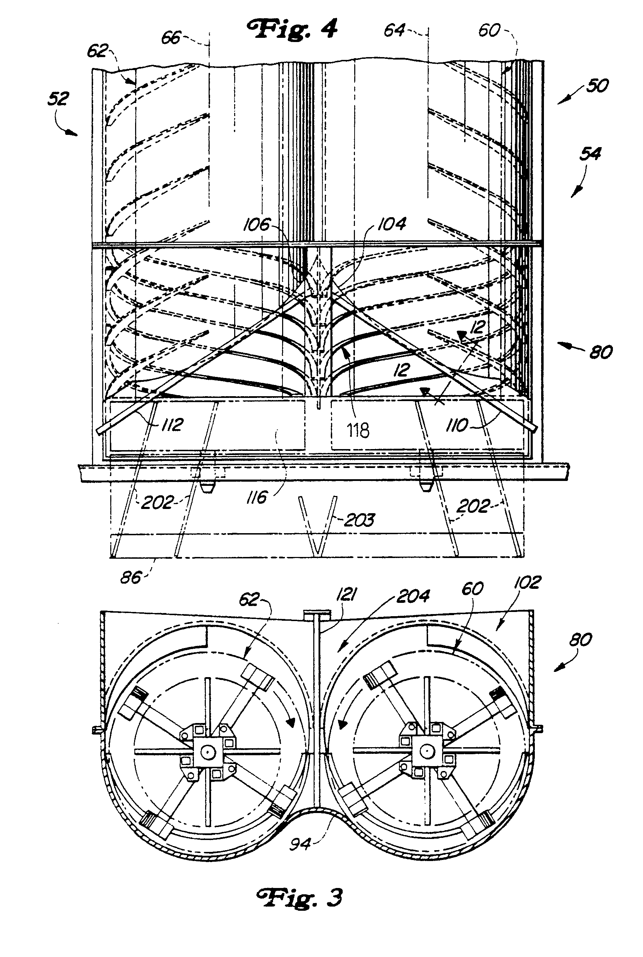

Wie aus Figur 3 hervorgeht, ist der obere linke Teil 102 des Einzugsgehäuses 80 ebenfalls halbkreisförmig ausgebildet und schließt sich an den Hauptteil 96 und an das Trenngehäuse 54 an. Der halbkreisförmige obere Teil 102 läuft schräg nach oben hin aus und weist somit eine diagonal verlaufende Kante 104 auf, die sich von dem stromabwärts liegenden Ende des vorderen Teiles 68 zur Mittellinie bis zu einer korrespondierenden Kante 106 erstreckt. Wie aus Figur 12 hervorgeht, ist an den Teil 102 eine Anschlußplatte 108 angeschlossen, die stromabwärts gesehen geneigt verläuft und an die Kante 104 anstößt und somit eine obere horizontal verlaufende Kante 110 bildet. Die linken und rechten Kanten 110 und 112 der Abdeckplatten sowie die quer verlaufende, abwärts liegende Kante 114 der Führungsplatte 86 bzw. die vordere quer verlaufende Ebene des Einzugsgehäuses 80, die durch die Stirnplatte 88 gebildet wird, bilden einen gleichschenkligen oberen Teil 116 und im Einzugsbereich 119 eine Einlaßöffnung 118. Der dreieckförmige Teil 116 wird durch eine obere Platte 120 abgedeckt.

Das Einzugsgehäuse 80 wird mittig durch eine vertikal verlaufende Trennwand 121 geteilt, die eine etwas nach hinten geneigt verlaufende Stirnkante 122 aufweist, die sich nahe der stromabwärts liegenden Seite des vorderen Teils 68 erstreckt. Zahlreiche Führungsrippen 124 sind auf der Innenseite des unteren Hauptteils 96 angeordnet und erstrekken sich über ca. 180°. Die innere zylindrisch ausgebildete Oberfläche, die durch die Rippen 124 gebildet wird, liegt auf der gleichen Höhe wie die innere Oberfläche des Trennkorbes 56. Eine kleinere Anzahl von Führungsrippen erstreckt sich über einen Winkel von 90° und befindet sich im oberen Teil des Gehäuses mit einer stromaufwärts liegenden Führungsrippe 126 im Bereich der Kante 104 und einer stromabwärts liegenden Führungsrippe 128, die sich in das Trenngehäuse 54 erstreckt.

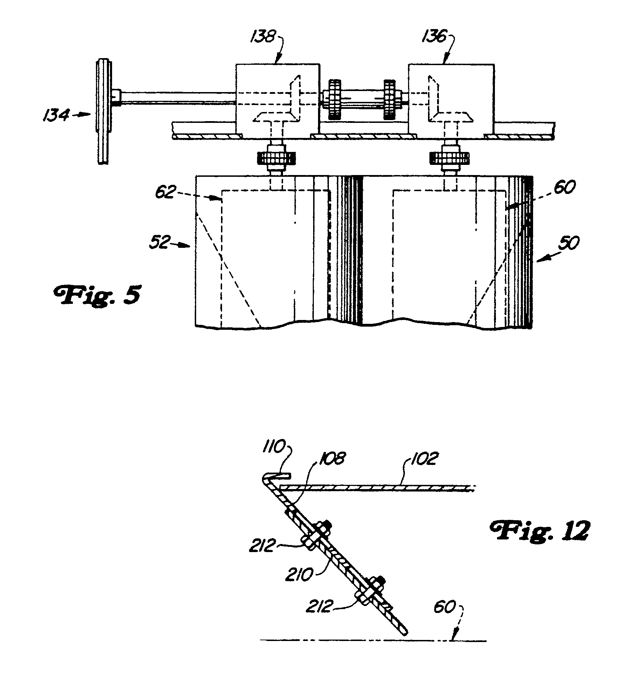

Der Rotor bzw. die Trenntrommel 60 weist eine stromaufwärts liegende Welle 130 auf, die mittels eines Lagers 132 in dem Träger 90 aufgenommen ist. Die in der Zeichnung nicht dargestellte Brennkraftmaschine des Mähdreschers 10 treibt eine Eingangswelle 134 an (Figur 5), die über ein linkes und rechtes Winkelgetriebe 138 und 136 mit den beiden Wellen 134 verbunden ist (Figur 3). Der Rotor 60 besteht aus einem Rahmen 140, der aus vier parallel verlaufenden, rechteckförmig ausgebildeten Rohrträgern 142 besteht, die über Platten 144 zusammengehalten werden. Der vordere Teil 68, der den Erntegutstrom in zwei Teilströme aufteilt, besteht aus zwei gegenüberliegenden Paddelarmen 148, die mittels Laschen 150 an den Rahmen 140 angeschlossen sind und sich diametral gegenüberliegen. An den äußeren Enden der Paddelarme sind Förderelemente 152 vorgesehen, die aus zwei sich in Längsrichtung des Rotors erstreckenden, diametral gegenüberliegenden Platten 154, 156 bestehen. Eine jede Platte ist mit Bezug auf die Oberfläche des Paddelarmes 148 ein wenig geneigt verlaufend angeordnet und bildet somit eine Förderfläche zum Transport des Erntegutes.

An den Paddelarm 148 schließen sich weitere identische Erntegutbeförderungselemente 160 an, die in dem Beschickungsteil 70 und in dem Trennteil 72 des Rotors 60 angeordnet sind. Ein jedes Erntegutbeförderungselement bzw. Erntegutbearbeitungselement 160 ist mittels eines Gelenkbolzens 162 an den Rahmen 140 schwenkbar angeschlossen, so daß es in einer Ebene verschwenkt werden kann, die parallel zur Achse 64 des Rotors 60 verläuft. Das stromabwärts liegende Ende des Trennteiles 72 besteht aus Austragförderelementen 164, die am Ende des Rotors 60 durch eine Stirnplatte 166 begrenzt werden. Die Austragförderelemente 164 sowie die Stirnplatte 166 können zentrisch zur Achse des Rotors 60 angeordnet sein.

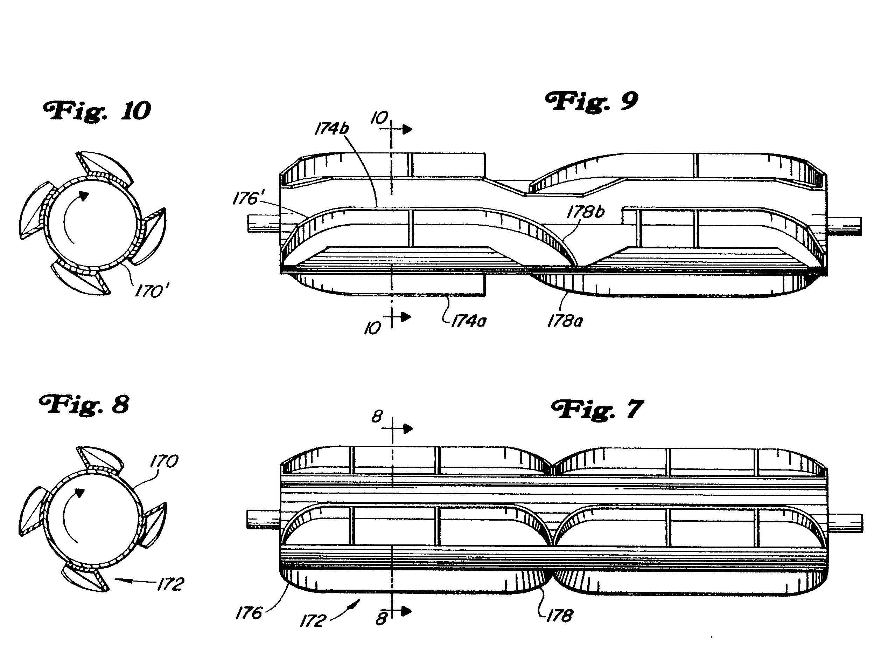

Wie aus den Figuren 7 und 8 hervorgeht, besteht die Schlagtrommel 84 aus einem Zylinderrohr 170, auf der vier gleiche Schlagleisten 172 angeordnet sind. Die Schlagleisten 172 sind mit Bezug auf die Drehrichtung nach hinten geneigt verlaufend angeordnet, während die zugehörige Stützplatte nach vorne zeigt. Wie aus der Figur 7 hervorgeht, sind die Schlagleisten 172 endseitig nach hinten abgerundet und mit einem nach hinten geneigt verlaufenden Teil 176 ausgestattet. Im mittleren Bereich der Schlagleisten 172, die sich über die gesamte Breite des Rotors 60 erstrecken, sind diese mit einer v-förmigen Einbuchtung 178 versehen. In einem weiteren Ausführungsbeispiel gemäß den Figuren 9 und 10 weist die Schlagtrommel ebenfalls ein Zylinderrohr 170' auf, auf dem vier Schlagleisten angeordnet sind. Die äußeren Enden der Schlagleisten sind ebenfalls mit einem abgerundeten Teil 176' versehen. Ebenso sind im mittleren Bereich die Schlagleisten mit einer v-förmigen Einbuchtung 178 ausgestattet. Wie aus Figur 9 hervorgeht, sind die Schlagleistenteile 174a und 174b unterschiedlich lang, so daß jeweils die zweite Schlagleiste die nachfolgende Schlagleiste im mittleren Bereich überlappt, der durch die Teile 178a und 178b angegeben ist. Hieraus ergibt sich auch, daß die Einbuchtung 178 gegenüber der nachfolgenden Einbuchtung 178 seitlich versetzt ist.

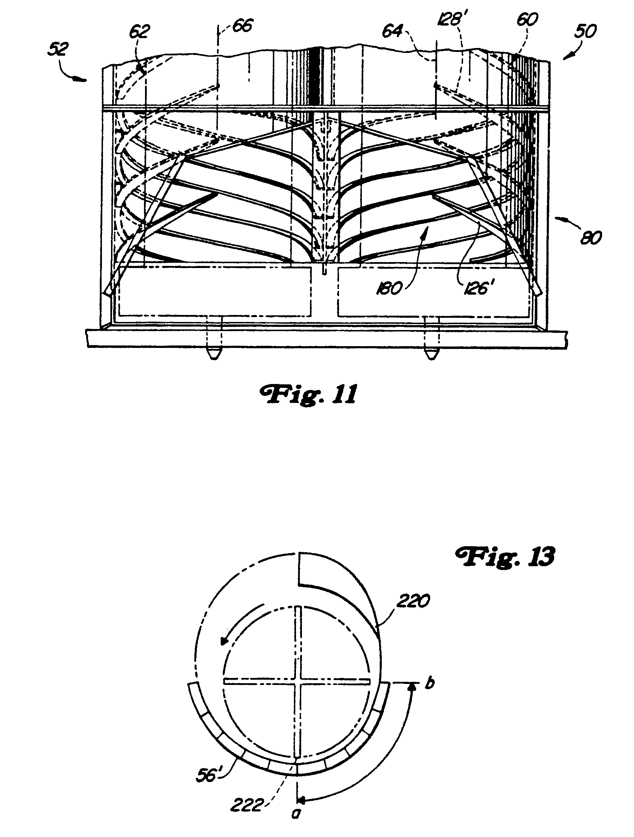

In einem weiteren Ausführungsbeispiel gemäß Figur 11 ist das Einzugsgehäuse 180 gegenüber dem in den Figuren 2, 3 und 4 dargestellten Einzugsgehäuse abgewandelt, und zwar ist der etwas konisch ausgebildete obere Teil 102 durch eine trapezformartige Einlaßzone ersetzt. Die gesamte Länge des Einzugsbereiches ist in etwa die gleiche wie die Einzugszone gemäß dem ersten Ausführungsbeispiel, wobei lediglich das Gesamtvolumen des letzteren Ausführungsbeispiels etwas größer ist. Die Führungsrippen 126' und 128' entsprechen den Führungsrippen 126 und 128.

Das von der Dreschtrommel 22 abgegebene Erntegut wird über den Einzugsteil 26 den beiden nebeneinander angeordneten Rotoren 60, 62 zugeführt. Die Umlenkrolle 82 sowie die Schlagtrommel 84 unterstützen die Förderwirkung des Erntegutes in das Einzugsgehäuse 80. Ebenso unterstützt die Führungsplatte 86 den Erntegutfluß, wenn dieser mit einer hohen Geschwindigkeit in den Einzugsbereich 119 über den vorderen Teil 68 und den Beschickungsteil 70 gelangt. Die Aufteilung des Erntegutstromes in zwei getrennte Erntegutströme erfolgt durch die Trennwand 121. Die v-förmige Ausbuchtung 178 unterstützt die Aufteilung des Erntegutstromes in zwei getrennte Erntegutströme sowie die einwandfreie Aufnahme der beiden Trenneinheiten 50, 52. Die Schlagleisten 172 bzw. die Teile 176 und 176' drücken den Erntegutstrom von außen zur Mitte in den dreieckförmig ausgebildeten Einzugsbereich und somit in die Einzugszone 119.

Nach innen zusammenlaufende Führungsrippen 202 und 203 auf der Führungsplatte 86 unterstützen den Erntegutfluß an dieser Stelle. Die Führungsrippen 202 und 203 wirken mit den Schlagleisten 172 der Schlagtrommel 84 zusammen. Ein Teil des Erntegutes, das in den Einzugsbereich 119 gelangt, wird durch die aggressiven Förderelemente 152 des vorderen Teiles 68 des Rotors 60 erfaßt und nach hinten geleitet. Die relativ größere radiale Reichweite dieses Rotorbereichs in Verbindung mit den Förderelementen 152 bewirkt einen einwandfreien Übergang des Erntegutflusses von der Dreschvorrichtung zur Trennvorrichtung. Das aufgenommene Erntegut wird in einen Spalt 204 zwischen den zwei Rotoren 60, 62 bewegt, wobei die Stirnkante 122 der Trennwand 121 eine Aufteilung des Erntegutflusses vornimmt. Der Wulst 94 zwischen den beiden Rotoren 60, 62 unterstützt den Aufteilungsvorgang des Erntegutstromes, da in diesem Bereich der tote Raum zwischen den Rotoren stark reduziert wird, so daß an dieser Stelle kein Erntegut liegen bleibt. Die Platten 154 und 156 der Förderelemente 152 bewirken einen einwandfreien Austrag des Erntegutes. Die Erntegutbearbeitungselemente 160 wirken dabei mit den im Gehäuse vorgesehenen Führungsrippen zusammen und führen das Erntegut spiralförmig durch das Trenngehäuse, bis es in den unteren Bereich des Austragteiles 30 gelangt und dort nach draußen bewegt wird. Die dreieckförmig ausgebildete Einzugszone im oberen Einzugsbereich 119 ermöglicht dem Hauptstrom des ankommenden Ernteguts, daß er direkt mit dem Einzugsteil der Rotoren in Berührung kommt, und zwar über fast die gesamte Länge des Beschickungsteils bzw. des Spaltes 204 zwischen den beiden Rotoren. Wie aus Figur 4 hervorgeht, wird das ankommende Erntegut direkt von den Erntegutbearbeitungselementen 160 erfaßt, wobei die Förderelemente 152 im vorderen Bereich der Trenntrommel das Erntegut ebenfalls erfassen und es nach hinten leiten. Bei diesem Vorgang wird bei einer halben Umdrehung das Erntegut von den unteren Führungsrippen 124 nach hinten und nach oben bewegt, bis es auf die innere Oberfläche des Einzugsgehäuses 80 bzw. des Teiles 102 gelangt. In Verbindung mit den Führungsrippen 126 und 128 wird eine einwandfreie Steuerung des Erntegutes innerhalb des Einzugsteiles gewährleistet und eine spiralförmige Bewegung des Erntegutes durch das Trenngehäuse 54 bewirkt. Die Führungsrippen 126 und 128 werden ferner durch eine einstellbare Platte 210 ergänzt (Figur 12), die mittels Schraubenbolzen 212 an den Teil 102 angeschlossen ist. Die Rückwand bzw. die Stufe 98 zwischen dem vorderen Teil 68 und dem Einzugsgehäuse 80 verläuft rechtwinklig zu dem Teil 92 und dem Hauptteil 96. Die Stufe 98 kann zur Verbesserung des Überganges in diesen beiden Gehäuseteilen ebenfalls geneigt verlaufend ausgebildet sein. Der Einzug des Erntegutstromes läßt sich dadurch verbessern, daß die nach unten verstellbare Platte 210 an die Anschlußplatte 108 angeschlossen ist (Figur 12). Die hierdurch gebildete Verlängerung durch die Platte 210 sowie die Anschlußplatte 108 läßt sich in Abhängigkeit der Erntegutbeschaffenheit bzw. des Gutstromes entsprechend verstellen, um somit einen guten Eingang des Erntegutes in das Trenngehäuse zu gewährleisten. Ferner trägt es dazu bei, daß das bereits um eine Drehung beförderte Erntegut innerhalb des Gehäuses bleibt.

In Figur 13 ist eine weitere Möglichkeit zur Steuerung des Erntegutflusses dargestellt. Es zeigt die Einführzone 220 zwischen der Gehäusewand und der Trenntrommel, wobei in diesem Bereich ein relativ großer Spalt zwischen der Gehäuseinnenwand und der Oberfläche der Trenntrommel besteht, während im unteren Bereich im Abschnitt a und b der Spalt zwischen dem Trennkorb 56' und den Spitzen 222 der Erntegutbearbeitungselemente relativ klein ist und dann in Richtung des Bogens a-b zunimmt. Hierdurch wird eine einwandfreie Steuerung bzw. Förderung des Erntegutflusses sowie ein einwandfreier Einzug auf der linken Seite, d. h. im Bereich der Einzugszone, erzielt, deren Spalt größer ist als auf der rechten Seite zwischen der Trenntrommel und dem Trennkorb 56'. Hierdurch können auch Verstopfungen im Einzugsbereich bzw. im Trennkorb 56' vermieden werden.

Durch die vorteilhafte Anordnung der Trenntrommel mit den zugehörigen Erntegutbearbeitungselementen wird auch Luft in Richtung des Erntegutflußstromes gepresst, wodurch die Erntegutbearbeitungselemente bei der Trennwirkung und die Austragförderelemente 164 bei der Austragsförderung unterstützt werden.

**Patentansprüche**

1. Mähdrescher mit einer nach dem Axialflußprinzip arbeitenden Trennvorrichtung (28), die zwei nebeneinander angeordnete, von je einem Trenngehäuse (54) umgebene, gegenläufig umlaufbare Rotoren (60, 62) aufweist, mit denen Erntegut in Form einer Matte spiralförmig durch die Trenngehäuse (54) bewegbar ist, die sich stromaufwärts bis in ein gemeinsames aus durchgehenden, die Rotoren (60, 62) teilweise zylinderförmig umgebenden Seitenwänden bestehendes Einzugsgehäuse (80) mit einer Einlaßöffnung (118) erstrecken, wobei die Rotoren (60, 62) an der der Einlaßöffnung (118) abgelegenen Seite von der einen Hälfte des stromaufwärts eine quer verlaufende Stirnplatte (88) aufweisenden Einzugsgehäuses (80) umgeben sind und die andere Hälfte des Einzugsgehäuses (80) durch je einen halbzylindrischen, die Rotoren (60, 62) zumindest teilweise umgebenden Teil (102) gebildet wird, wobei in beiden Hälften des Einzugsgehäuses (80) Führungsrippen (124 bis 128) derart vorgesehen sind, daß das durch die Einlaßöffnung (118) aufgegebene Erntegut nach etwa einer halben Umdrehung der Rotoren (60, 62) in den halbzylindrischen, die Rotoren zumindest teilweise umgebenden Teil (102) des Einzugsgehäuses (80) bringbar ist, dadurch gekennzeichnet, daß die zuvor genannten halbzylindrischen, die Rotoren (60, 62) zumindest teilweise umgebenden Teile (102) des Einzugsgehäuses (80) jeweils nur eine freie Kante (104, 106) aufweisen, die mit der Stirnplatte (88) die Einlaßöffnung (118) bilden und mit Bezug auf die Förderrichtung der Trennvorrichtung (28) von ihren stromaufwärts liegenden seitlichen Enden zu einem stromabwärts liegenden Punkt im wesentlichen dreieckförmig zusammenlaufen.

2. Mähdrescher nach Anspruch 1, dadurch gekennzeichnet, daß im Einzugsgehäuse (80) zwischen den Rotoren (60, 62) eine Trennwand (121) vorgesehen ist.

3. Mähdrescher nach Anspruch 1 und 2, dadurch gekennzeichnet, daß der stromabwärts liegende Schnittpunkt der durch schräges Anschneiden gebildeten Kanten (104, 106) der anderen halbzylindrischen Hälfte des Einzugsgehäuses (80) in der Vertikalebene der Trennwand (121) liegt.

4. Mähdrescher nach Anspruch 1 und 2, dadurch gekennzeichnet, daß der Einzugsteil der Rotoren (60, 62) zwei stromabwärts und nach unten geneigt verlaufende Platten (210) aufweist, die die schräg verlaufenden Kanten (104, 106) schneiden.

5. Mähdrescher nach Anspruch 4, dadurch gekennzeichnet, daß jede Platte (210) verstellbar ist und sich in das zylindrische Einzugsgehäuse (80) erstreckt.

6. Mähdrescher nach Anspruch 1, dadurch gekennzeichnet, daß sich an das Einzugsgehäuse (80) die Trennwand (121) anschließt.

7. Mähdrescher nach Anspruch 1, dadurch gekennzeichnet, daß mit Bezug auf die Rotoren (60, 62) eine quer verlaufende Schlagtrommel (84) die gesamte Breite des stromaufwärts liegenden Endes des Einzugsgehäuses (80) auf einer horizontal verlaufenden Ebene überspannt, die dicht unter einer Führungsplatte (86) liegt, die mit der Schlagtrommel (84) einen Erntegutaufnahmedurchlaßspalt bildet, wobei die Drehrichtung der Schlagtrommel (84) derart verläuft, daß das Erntegut dem Durchlaßspalt und somit der Schlagtrommel oberschlächtig zugeführt wird.

8. Mähdrescher nach Anspruch 7, dadurch gekennzeichnet, daß stromabwärts von der Führungsplatte (86) eine die dreieckförmig ausgebildete Einlaßöffnung (118) des Einzugsgehäuses (80) abdeckende Platte (120) angeordnet ist.

9. Mähdrescher nach Anspruch 7, dadurch gekennzeichnet, daß die Schlagtrommel (84) zahlreiche sich axial erstreckende Schlagleisten (172) aufweist und daß eine jede Schlagleiste (172) in der Mitte zwischen den beiden Enden der Schlagleiste eine V-förmige Einbuchtung (178) aufweist.

10. Mähdrescher nach Anspruch 9, dadurch gekennzeichnet, daß die äußeren Enden der Schlagleisten (172) mit Bezug auf die Drehrichtung der Schlagtrommel (84) eine nach hinten gebogene Förderfläche aufweisen.

11. Mähdrescher nach Anspruch 7, dadurch gekennzeichnet, daß die Führungsplatte (86) nach innen bzw. zur Mitte ausgerichtete Führungsrippen (202) aufweist.

12. Mähdrescher nach Anspruch 1, dadurch gekennzeichnet, daß das stromaufwärts liegende Ende der Rotoren (60, 62) zumindest ein paddelartig ausgebildetes Förderelement aufweist, das jeweils mit dem zugehörigen Rahmen (140) der Rotoren (60, 62) verbunden ist, wobei die gegenüberliegenden Enden zweier Förderelemente im Einlaßspalt zwischen den beiden Rotoren (60, 62) aneinander reichen.

13. Mähdrescher nach Anspruch 12, dadurch gekennzeichnet, daß sich an dem Einzugsteil der Rotoren (60, 62) ein Teil anschließt, auf dem zahlreiche sich radial erstreckende, fingerartige Förderelemente (152) angeordnet sind, wobei im Arbeitseinsatz die paddelartigen Förderelemente und die fingerartigen Förderelemente (152) je einen Rotationskreis bilden und der Rotationskreis der paddelartigen Förderelemente größer ist als der Rotationskreis der fingerartigen Förderelemente.

14. Mähdrescher nach Anspruch 12, dadurch gekennzeichnet, daß ein jedes paddelartiges Förderelement eine mit Bezug auf die Längsachse der Rotoren (60, 62) schräg verlaufende Platte (154, 156) aufweist.

**Claims**

1. Combine harvester with a separator (28) which works on the axial flow principle and which comprises two counter-rotatable rotors (60, 62) arranged adjacent to each other, which are each surrounded by a separating housing (54) and with which harvest material can be moved spirally in the form of a mat through the separating housings (54) which extend upstream into a common intake housing (80) with an inlet opening (118), which intake housing (80) consists of continuous side walls partially cylindrically surrounding the rotors (60, 62), wherein the rotors (60, 62) on the side remote from the inlet opening (118) are surrounded by one half of the intake housing (80), which comprises a transverse end plate (88) upstream, and the other half of the intake housing (80) is formed in each case by a semicylindrical portion (102) at least partially surrounding the rotors (60, 62), wherein guide ribs (124 to 128) are provided in both halves of the intake housing (80) in such a way that the harvest material fed through the inlet opening (118) after about one half turn of the rotors (60, 62) can be moved into the semicylindrical portion (102) of the intake housing (80) at least partially surrounding the rotors, characterised in that the above-mentioned semicylindrical portions (102) of the intake housing (80) at least partially surrounding the rotors (60, 62) each comprise only one free edge (104, 106) which with the and plate (88) form the inlet opening (118) and with respect to the direction of transport of the separator (28) converge essentially in a triangle from their upstream lateral ends to a point downstream.

2. Combine harvester according to claim 1, characterised in that a partition (121) is provided in the intake housing (80) between the rotors (60, 62).

3. Combine harvester according to claims 1 and 2, characterised in that the downstream point of intersection of the edges (104, 106) of the other semicylindrical half of the intake housing (80), which edges are formed by a sloping cut, is located in the vertical plane of the partition (121).

4. Combine harvester according to claims 1 and 2, characterised in that the intake portion of the rotors (60, 62) comprises two plates (210) which are downwardly inclined downstream and which intersect with the obliquely extending edges (104, 106).

5. Combine harvester according to claim 4, characterised in that each plate (210) is adjustable and extends into the cylindrical intake housing (80).

6. Combine harvester according to claim 1, characterised in that the partition (121) adjoins the intake housing (80).

7. Combine harvester according to claim 1, characterised in that with respect to the rotors (60, 62), a transverse beater drum (84) spans the whole width of the upstream end of the intake housing (80) on a horizontal plane which lies close under a guide plate (86) which with the beater drum (84) forms a gap for throughflow of harvest material, wherein the direction of rotation of the beater drum (84) is such that the harvest material is supplied to the throughflow gap and hence to the beater drum in overshot relationship.

8. Combine harvester according to claim 7, characterised in that downstream of the guide plate (86) is arranged a plate (120) covering the triangular inlet opening (118) of the intake housing (80).

9. Combine harvester according to claim 7, characterised in that the beater drum (84) comprises numerous axially extending beater strips (172) and that each beater strip (172) comprises a V-shaped recess (178) in the centre between the two ends of the beater strip.

10. Combine harvester according to claim 9, characterised in that the outer ends of the beater strips (172) with respect to the direction of rotation of the beater drum (84) comprise a rearwardly curved conveying surface.

11. Combine harvester according to claim 7, characterised in that the guide plate (86) comprises guide ribs (202) orianted inwardly or to the centre.

12. Combine harvester according to claim 1, characterised in that the upstream end or the rotors (60, 62) comprises at least one paddle-like conveying element which is in each case connected to the associated frame (140) of the rotors (60, 62), wherein the opposite ends of two conveying elements extend up to each other in the inlet gap between the two rotors (60, 62).

13. Combine harvester according to claim 12, characterised in that adjoining the intake portion of the rotors (60, 62) is a portion on which are arranged numerous radially extending, finger-like conveying elements (152), wherein in working use the paddle-like conveying elements and the finger-like conveying elements (152) each form a rotary circle and the rotary circle of the paddle-like conveying elements is larger than the rotary circle of the finger-like conveying elements.

14. Combine harvester according to claim 12, characterised in that each paddle-like conveying element comprises a plate (154, 156) extending obliquely with respect to the longitudinal axis of the rotors (60, 62).

**Revendications**

1. Moissonneuse-batteuse comportant un dispositif de séparation (28) selon le principe du flux axial et comporte deux rotors (60,62) disposés côte-à-côte, qui tournent en des sens opposés, sont entourés chacun par un carter de séparation (54) et au moyen desquels la récolte peut être entraînée selon un mouvement hélicoïdal sous la forme d'un tapis dans les carters de séparation (54), qui s'étendent en amont jusqu'à un carter commun d'entrée (80), qui est constitué par des parois latérales continues entourant partiellement avec une forme cylindrique les rotors (60,62), et comportant une ouverture d'admission (118), les rotors (60,62) étant entourés, sur le côté situé à l'opposé de l'ouverture d'admission (118), par une moitié du carter d'entrée (80) possédant, sur le côté amont, une plaque frontale transversale (88), tandis que l'autre moitié du carter d'entrée (80) est formée respectivement par une partie semi-cylindrique (102) qui entoure au moins partiellement les rotors (60,62), et dans laquelle des nervures de guidage (124 à 128) sont prévues dans les deux moitiés du carter d'entrée (80) de telle sorte que la récolte introduite par l'ouverture d'admission (118) peut être amenée, au bout d'environ une demi-rotation des rotors (60,62), dans la partie semi-cylindrique (102), qui entoure au moins partiellement les rotors, du carter d'entrée (80), caractérisée en ce que les parties semi-cylindriques (102), mentionnées précédemment, qui entourent au moins partiellement les rotors (60,62), du carter d'entrée (80) possèdent chacune seulement un bord libre (104,106), ces bords délimitant, avec la plaque frontale (88), l'ouverture d'admission (118) et concourant, selon une disposition sensiblement triangulaire, depuis leurs extrémités latérales situées sur le côté amont par rapport à la direction d'entraînement du dispositif de séparation (28) jusqu'à un point situé en aval.

2. Moissonneuse-batteuse selon la revendication 1, caractérisée en ce qu'une paroi de séparation (121) est prévue dans le carter d'entrée (80) entre les rotors (60,62).

3. Moissonneuse-batteuse selon les revendications 1 et 2, caractérisée en ce que le point d'intersection, situé en aval, des bords (104,106), formés par des découpes obliques, de l'autre moitié semi-cylindrique du carter d'entrée (80) est situé dans le plan vertical de la paroi de séparation (121).

4. Moissonneuse-batteuse selon les revendications 1 et 2, caractérisée en ce que la partie d'entrée des rotors (60,62) comporte deux plaques (210) qui s'étendent vers l'aval en étant inclinées vers le bas et recoupent les bords obliques (104,106).

5. Moissonneuse-batteuse selon la revendication 4, caractérisée en ce que chaque plaque (210) est réglable et s'étend dans le carter d'entrée cylindrique (80).

6. Moissonneuse-batteuse selon la revendication 1, caractérisée en ce que la paroi de séparation (121) se raccorde au carter d'entrée (80).

7. Moissonneuse-batteuse selon la revendication 1, caractérisée en ce que par rapport aux rotors (60,62), un tambour transversal de battage (84) s'étend sur toute la largeur de l'extrémité, située en amont, du carter d'entrée (80), dans un plan horizontal qui est situé directement au-dessous d'une plaque de guidage (86) qui forme, avec le tambour de battage (84), une fente de passage de réception de la récolte, le sens de rotation du tambour de battage (84) étant tel que la récolte est envoyée à la partie supérieure du tambour de battage.

8. Moissonneuse-batteuse selon la revendication 7, caractérisée en ce qu'en aval de la plaque de guidage (86) est disposée une plaque (120) qui recouvre l'ouverture d'admission de forme triangulaire (78) du carter d'entrée (80).

9. Moissonneuse-batteuse selon la revendication 7, caractérisée en ce que le tambour de battage (84) possède de nombreuses battes axiales (172) et que chaque batte (172) possède une encoche en V (178) dans sa partie centrale entre ses deux extrémités.

**10.** Moissonneuse-batteuse selon la revendication 9, caractérisée en ce que les extrémités extérieures des battes (172) possèdent une surface d'entraînement recourbée vers l'arrière, par rapport au sens de rotation du tambour de battage (84).

**11.** Moissonneuse-batteuse selon la revendication 7, caractérisée en ce que la plaque de guidage (86) possède des nervures de guidage (202) dirigée vers l'intérieur ou vers le centre.

**12.** Moissonneuse-batteuse selon la revendication 1, caractérisée en ce que l'extrémité, située sur le côté amont, des rotors (60,62) possède au moins un élément d'entraînement réalisé sous la forme de palettes et qui est raccordé respectivement au cadre associé (140) du rotor (60,62), les extrémités opposées des deux éléments d'entraînement se rapprochant l'une de l'autre dans la fente d'admission présente entre les deux rotors (60,62).

**13.** Moissonneuse-batteuse selon la revendication 12, caractérisée en ce qu'à la partie d'entrée des rotors (60,62) se raccorde une partie, sur laquelle sont disposés de nombreux éléments radiaux d'entraînement (152), réalisés en forme de doigts, les éléments d'entraînement en forme de palettes et les éléments d'entraînement (152) en forme de doigts circulent suivant des cercles de rotation dans la zone de travail, et le cercle de rotation des éléments d'entraînement en forme de palettes est plus grand que le cercle de rotation des éléments d'entraînement en forme de doigts.

**14.** Moissonneuse-batteuse selon la revendication 12, caractérisée en ce que chaque élément d'entraînement en forme de palette possède une plaque (154,156) qui s'étend obliquement par rapport à l'axe longitudinal des rotors (60,62).

Fig. 1

10

Fig. 2

Fig. 4

Fig. 3

138  136

134

62  60

52  50

**Fig. 5**

110  108  102

212

210

212  60

**Fig. 12**

Fig. 6

*Fig. 10*

170'

*Fig. 9*

174b
10
176'
178b
10
174a
178a

*Fig. 8*

170
172

*Fig. 7*

8
176
172
8
178

EP 0 244 862 B1

**Fig. 11**

**Fig. 13**